# EUROPEAN PATENT APPLICATION

(11) **EP 0 903 915 A1**
(43) Date of publication of application: **24.03.1999**
(21) Application number: 97116350.6
(22) Date of filing: 19.09.1997
(51) Int. Cl.: H04M 3/00, H04L 12/64

(54) **Device and method for transmission of audio data**

(71) Applicant: Skigin, Dimitri, 06000 Nice (FR); Fraidzon, Maksim, Jérusalem (IL); Skoblov, Anatoly B., Saint Petersburg (RU)
(72) Inventor: Skigin, Dimitri, 06000 Nice (FR); Fraidzon, Maksim, Jérusalem (IL); Skoblov, Anatoly B., Saint Petersburg (RU)
(74) Representative: Nithardt, Roland

(57) **Abstract**

The device comprises a transmitting end (100) and a receiving end (107) connected via a general-purpose computer network (9) such as an Internet protocol based network. The transmitting end comprises a telephone set (1) connected to a signal detector-distributor (3) having an output connected to an analog-to-digital converter 6 that provides data for a digital data compressor 7, which sends data to the receiving end (107) through the computer network (9). The receiving end (107) comprises a digital data decompressor (16) connected to a sound transmitter (18) that transmits the voice over a switch (14) to a telephone set (20).

## Description

The present invention relates to the field of telecommunication, namely, of telephone communication combined with other communication means and may be used for providing a voice intercommunication between subscribers of remote local telephone networks by means of a public computer network. This invention relates to a telephone system capable to directly transmit audio data, and in particular voice data between remote subscribers of a local telephone service bound by means of Internet or any public computer network. Original combination of techniques and devices used in public telephone networks and computer networks allows usage of Internet for long distance telephone conversations.

More particularly, this invention relates to a communication system for the transmission of audio information via a computer network comprising at least two computers, connected to said computer network.

This invention also relates to a method for transmitting audio information through a computer network.

Different communication systems are described in various documents. Namely, the US patent 5,604,737 describes a voice communication system which connects voice terminals connected to a local area network (LAN) and to a Public Switching Telephone Network (PSTN).

The device described in WO 93/10621 allows to input voice messages to a security alarm system.

US Patents 5,142,567, and 4,939,772 as well as European patent 0 363 680 also describe systems that allow switching between voice and data transmission. These devices use modems and terminal switches and have restricted functionality.

The communication system described in WO 94/24803 is capable to transmit audio, video, and digital data. The system supports a virtual service that allows connecting users who have different equipment and access control to both integrated service and regular networks. This system is quite complex.

The US patent 5,325,423 describes a system which comprises a computer installed on both transmitting and receiving ends that are connected by means of a communication line, analog-to-digital and digital-to-analog converters on transmitting and receiving end respectively. A multimedia modem accepts the heterogeneous data from the network, which are at least partially compressed. This data is transmitted, and the compressed data is decompressed back on the other end. The system also contains the transmitter of uncompressed part of data receiver from the network and the device that merges compressed and uncompressed data to produce the output signal.

The disadvantage of all these systems is the hardware complexity if used to establish voice communication between remote subscribers over a public computer network, since analog signal generated by the system cannot be directly transmitted over local telephone network.

The present invention provides a real time voice communication system between subscribers of Public Switching Telephone Networks (PSTN) using regular telephone sets with usage of Internet as a transportation media.

The object of this invention is obtained by a communication device as described in preamble and characterised in that at least one telephone set is connected to each computer, in that at least one telephone interface adapter is connected between said telephone set and said computer to transform said audio information in digital information.

In the preferred embodiment of the invention, the communication system comprises means for introducing a destination access code.

This destination access code preferably comprises a conventional telephone keyboard.

The communication system of the present invention advantageously comprises means for detecting incoming calls, means for compressing said digital information before transmitting it through the computer network and means for decompressing said digital information after transmission through the computer network.

In a preferred form of the invention, said computer network is an Internet protocol based network.

The object of the present invention is also obtained by a method as described in preamble, and characterised in that it comprises the steps of connecting at least two users by means of a telephone set, transforming the audio information of each user in digital information by means of a telephone set adapter, transmitting those digital information via computers connected to said computer network, and transforming said digital information in audio information by means of a telephone set adapter.

Prior to connecting said users, an incoming call is detected.

In the invention's preferred embodiment, the digital information corresponding to the audio information are compressed before their transmission and decompressed after their reception.

The connection between the users is preferably established by composing a digital access code by means of a conventional telephone keyboard.

In a preferred form of the invention, the computer network is an Internet protocol based network.

The preferred embodiment of the present invention is illustrated by the following drawings in which like reference numerals indicate like parts and in which:
- Figure 1 shows a general Internet voice communication scheme;
- Figure 2 shows a block diagram of the telephone interface adapter of the present invention; and
- Figure 3 shows a Block Diagram of the Telephone Server method.

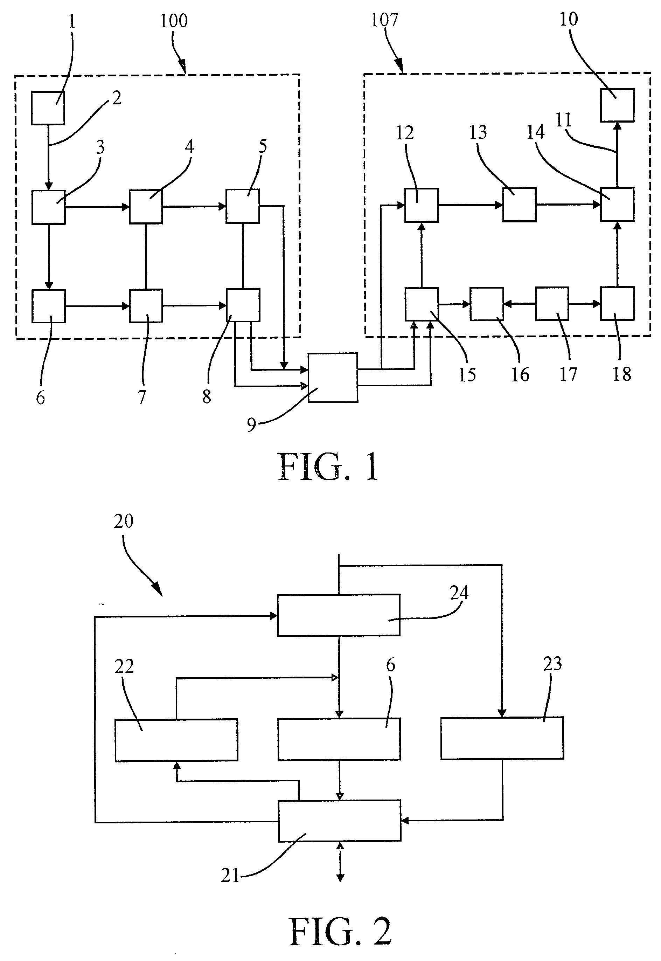

With reference to figures 1 and 2, on a first end of the system, called the transmitting end 100, there is a telephone set 1 that is connected by means of a local telephone line 2 with a signal detector-distributor 3, which output is connected to a DTMF decoder 4. The DTMF decoder is connected to a transmission device 5 that sends a recognized telephone number over a network using standard protocols. Another output of the signal detector-distributor 3 is connected to an analog-to-digital converter 6 that provides data for a digital data compressor 7. The later is connected to a computer 8 that sends data over a general-purpose computer network 9 that also accepts data from the transmission device 5.

On an other end of the system, called the receiving end 107, the proposed telephony system has a telephone set 10 that is connected to a local telephone line 11. A destination number converter 12 accepts digital compressed data from the public computer network 9. The output of converter 12 is connected with input of a dialer 13 output of which goes to a switch 14 that implements sequential transmission of voice and touch-tone signals. A computer 15 provides data to a digital data decompressor 16, output of which in turn is united with input of a digital-to-analog converter 17. The digital-to-analog converter is connected with a sound transmitter 18 that transmits the voice over the switch 14 to the telephone line 11.

The local telephone line 2 is a public switched telephone network (PSTN). The telephone sets are connected to a regular telephone line from the PSTN via a telephone interface adapter 20 as well as to Internet 9. The telephone set 1 interacts with a remote telephone set 10 to provide a two way communication between calling party at telephone set 1 and target party on telephone set 10 connected to a remote PSTN by the local telephone line 11.

Figure 2 describes the telephone interface adapter 20, that consists of a digital signal processor (DSP) 21, that performs voice signal digitized by the analog-to-digital converter 6 and sends results to the telephone set of figure 1. This digital signal processor 21 also produces a voice signal, that comes from telephone set 1 through a digital-to-analog converter (DAC) 22. The telephone interface adapter 20 also contains a sonorous signal detector 23, which determines incoming call event, and a relay 24, that turns on/off the telephone interface adapter 20 to telephone line.

The Digital Signal Processor (DSP) 21 functionality includes voice data compression and decompression, line echo compensation to permit full-duplex conversation, voice activity detection, dynamic volume adjusting and DTMF (touch-tone) detection.

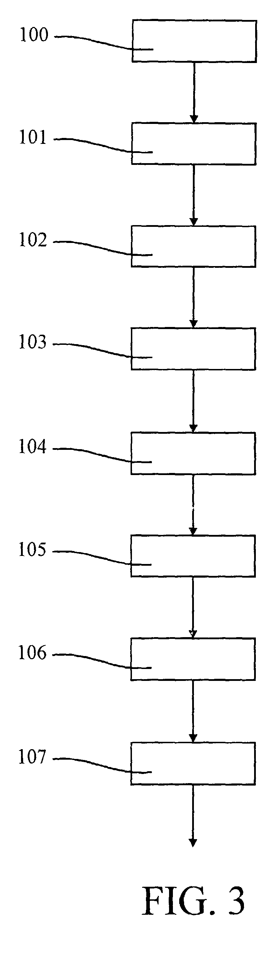

With reference to figure 3, the diagram shows the mains steps of the method of the present invention.

Proposed system operates as follows. After dialing a number on the transmission end 100, of the telephone set 1 the connection over the telephone line 2 occurs, whereupon the destination number is dialed, in step 101 of figure 3, using the touch-tone keyboard of the telephone set 1. Getting through the detector-distributor 3, the part of message that contains the tone coded destination telephone number comes on the DTMF recognition device 4, then via the transmission device 5, is sent, in step 102, over the computer network 9 using standard protocols to the destination number converter 12. The received information is passed to the dialer 13. A signal gets to the telephone set 10 through the device 14 and the local telephone network 11. Both computers are then connected in step 103. After picking up the receiver by subscriber on the receiving end, the signals that comprise the sonorous information come from the telephone set 1 through the distributor 3 enter the analog-to-digital converter 6, from which, being compressed in step 104, by the device 7, are transmitted in step 105, to the public computer network 9 by means of connected to it computer 8, equipped with standard digital information exchange using public network protocols software. This data enters the similar computer on the receiving end 107, where after the decompression of step 106 by the device 16 by means of the Digital-to-Analog converter 17, are converted in the analog form. The analog signal enters the sound transmitter 18, whence, through the device 14 are sent over the local telephone line, already open by the dialer 13, to the telephone set 10. Thereby the subscriber who uses the telephone set 10 receives the audio Information from another subscriber who resides at the transmitting end.

For arrangement of a dialogue, each end of the system is equipped with full set of hardware and software, in order to serve as both transmitting and receiving station simultaneously.

The invention allows new possibilities for transmitting and receiving signals by using a general purpose equipment that simplifies and makes long-distance and international phone calls significantly cheaper.

The proposed system may be implemented using the existing communication means and equipment that is regularly used on telephone exchanges and in computer networks.

## Claims

1. Communication system for the transmission of audio information via a computer network (9) comprising at least two computers (8, 15), connected to said computer network (9), characterised in that at least one telephone set (1, 10) is connected to each computer, in that at least one telephone interface adapter (20) is connected between said telephone set and said computer to transform said audio information in digital information.

2. Communication system as defined in claim 1, characterised in that it comprises means for introducing a destination access code.

3. Communication system as defined in claim 2, characterised in that said means for introducing a destination access code comprises a conventional telephone keyboard.

4. Communication system as defined in claim 1, characterised in that it comprises means (23) for detecting incoming calls.

5. Communication system as defined in claim 1, characterised in that it comprises means (7) for compressing said digital information before transmitting it through the computer network (9) and means (16) for decompressing said digital information after transmission through the computer network (9).

6. Communication system as defined in claim 1, characterised in that said computer network (9) is an Internet protocol based network.

7. Method for transmitting audio information through a computer network (9), characterised in that it comprises the steps of connecting at least two users by means of a telephone set (1, 10), transforming the audio information of each user in digital information by means of a telephone set adapter (20), transmitting those digital information via computers (8, 15) connected to said computer network (9), and transforming said digital information in audio information by means of a telephone set adapter (20).

8. Method as described in claim 7, characterised in that, prior to connecting said users, an incoming call is detected.

9. Method as described in claim 8, characterised in that the digital information corresponding to the audio information are compressed before their transmission and decompressed alter their reception.

10. Method as described in claim 7, characterised in that the connection between the users is established by composing a digital access code by means of a conventional telephone keyboard.

11. Method as described in claim 7, characterised in that the computer network (9) is an Internet protocol based network.
